# EUROPEAN PATENT SPECIFICATION

(11) **EP 1 338 149 B1**
(45) Date of publication and mention of the grant of the patent: **14.06.2006**
(21) Application number: 01999118.1
(22) Date of filing: 21.11.2001
(51) Int. Cl.: H04N 7/26, H04N 7/24, H04N 5/00, H04N 7/52, H04N 7/58

(54) **METHOD AND DEVICE FOR VIDEO SCENE COMPOSITION FROM VARIED DATA**
VERFAHREN UND GERÄT ZUR ZUSAMMENSTELLUNG VON VIDEOSZENEN AUS VERSCHIEDENARTIGEN DATEN
PROCEDE ET DISPOSITIF DE COMPOSITION DE SCENES VIDEO A PARTIR DE DONNEES VARIEES

(30) Priority: 01.12.2000 EP 00403386
(43) Date of publication of application: 27.08.2003
(73) Proprietor: Koninklijke Philips Electronics N.V., 5621 BA Eindhoven (NL)
(72) Inventor: PLANTEROSE, Thierry, NL-5656 AA Eindhoven (NL)
(74) Representative: van Oudheusden-Perset, Laure E.
(86) International application number: PCT/EP2001/013629
(87) International publication number: WO 2002/045435

(56) References cited:
- EP-A- 0 940 990
- DOENGES P K ET AL: "Audio/video and synthetic graphics/audio for mixed media" SIGNAL PROCESSING. IMAGE COMMUNICATION, ELSEVIER SCIENCE PUBLISHERS, AMSTERDAM, NL, vol. 9, no. 4, 1 May 1997 (1997-05-01), pages 433-463, XP004075338 ISSN: 0923-5965
- JOHANN J: "GESTALTUNG INTERAKTIVER ANWENDUNGEN IM BROADCAST-BEREICH DESIGN OF INTERACTIVE BROADCAST APPLICATIONS" FREQUENZ, SCHIELE UND SCHON GMBH. BERLIN, DE, vol. 54, no. 1/2, January 2000 (2000-01), pages 9-16, XP000954235 ISSN: 0016-1136
- AVARO O ET AL: "The MPEG-4 systems and description languages: A way ahead in audio visual information representation" SIGNAL PROCESSING. IMAGE COMMUNICATION, ELSEVIER SCIENCE PUBLISHERS, AMSTERDAM, NL, vol. 9, no. 4, 1 May 1997 (1997-05-01), pages 385-431, XP004075337 ISSN: 0923-5965
- SIGNES J ET AL: "MPEG-4'S BINARY FORMAT FOR SCENE DESCRIPTION" SIGNAL PROCESSING. IMAGE COMMUNICATION, ELSEVIER SCIENCE PUBLISHERS, AMSTERDAM, NL, vol. 15, no. 4/5, January 2000 (2000-01), pages 321-345, XP000989994 ISSN: 0923-5965

## Description

The present invention relates to a method of composing an MPEG-4 video scene content at least from a first set of input video objects coded according to the MPEG-4 standard, said method comprising a first decoding step for generating a first set of decoded MPEG-4 video objects from said first set of input video objects, and a rendering step for generating composed frames of said video scene from at least said first set of decoded MPEG-4 video objects.

This invention may be used, for example, in the field of digital television broadcasting and implemented in a set top box as an Electronic Program Guide (EPG).

The MPEG-4 standard relative to system aspects, referred to as ISO/IEC 14496-1, provides functionality for multimedia data manipulation. It is dedicated to scene composition containing different natural or synthetic objects, such as two-or three-dimensional images, video clips, audio tracks, texts or graphics. This standard allows scene content creation usable with multiple applications, allows flexibility in object combination, and offers means for user interaction in scenes containing multiple objects. This standard may be used in a communication system comprising a server and a client terminal via a communication link. In such applications, MPEG-4 data exchanged between both sets are streamed on said communication link and used at the client terminal to create multimedia applications.

The international patent application WO 00/01154 describes a terminal and method of the above kind for composing and presenting MPEG-4 video programs. This terminal comprises:
- a terminal manager for managing the overall processing tasks,
- decoders for providing decoded objects,
- a composition engine for maintaining, updating, and assembling a scene graph of the decoded objects, and
- a presentation engine for providing a scene for presentation.

DOENGES P K ET AL: 'Audio/video and synthetic graphics/audio for mixed media', SIGNAL PROCESSING, IMAGE COMMUNICATION, ELSEVIER SCIENCE PUBLISHERS, AMSTERDAM, NL, vol. 9, no. 4, 1 May 1997, pages 433-463, ISSN: 0923-5965 discloses the concepts of the MPEG-4 description language (MDSL) in the framework of synthetic/natural hybrid coding (SNHC) aiming at integrated spatial-temporal coding of computer graphics with standardised audio/visual objects.

JOHANN J: 'GESTALTUNG INTERAKTIVER ANWENDUNGEN IM BROADCAST-BEREICH, DESIGN OF INTERACTIVE BROADCAST APPLICATIONS' FREQUENZ, SCHIELE UND SCHON GMBH, BERLIN, DE, vol. 54, no. 1/2, January 2000, pages 9-16, ISSN: 0016-1136, describes the composition of a full MPEG-2 image and additional information overlaid thereon, both coded as an MPEG-4 object, with other MPEG-4 compliant data streams.

It is an object of the invention to provide a cost-effective and optimized method of video scene composition that allows the composition of an MPEG-4 video scene simultaneously from video data coded according to the MPEG-4 video standard referred to as ISO/IEC 14496-2 and video data coded according to other video standards. The invention takes the following aspects into consideration.

The composition method according to the prior art allows the composition of a video scene from a set of decoded video objects coded according to the MPEG-4 standard. To this end, a composition engine maintains and updates a scene graph of the current objects, including their relative positions in a scene and their characteristics, and provides a corresponding list of objects to be displayed to a presentation engine. In response, the presentation engine retrieves the corresponding decoded object data stored in respective composition buffers. The presentation engine renders the decoded objects for providing a scene for presentation on a display.

With the widespread use of digital networks such as the Internet, most multimedia applications resulting in a video scene composition collect video data from different sources to enrich their content. In this context, if this prior art method is used for a video scene composition, collected data not compliant with the MPEG-4 standard could not be rendered, which would lead to a poor video scene content or produce an error in the applications. Indeed, this prior art method is very restrictive since the video scene composition can exclusively be performed from video objects coded according to the MPEG-4 system standard, which excludes the use of other video data in the video scene composition, such as MPEG-2 video data.

To circumvent the limitations of the prior art method, the method of video scene composition according to the invention is characterized in that it comprises :
a) a second decoding step for generating a set of decoded video data from a second set of input video data not MPEG-4 compliant.
b) a video object creation step for generating a second set of video objects, each created video object being formed by the association of a decoded video data extracted from said set of decoded video data and a set of properties for defining characteristics of said decoded video data in the video scene, said second set of video objects being rendered jointly with said first set of decoded MPEG-4 video objects during said rendering step.

This allows a rendering of all the input video objects in the scene so as to result in an MPEG-4 video scene. Indeed, it becomes possible to create and render an enriched video scene from MPEG-4 video objects and video objects not compliant with the MPEG-4 standard.

The association of properties to video objects not compliant with the MPEG-4 standard being cost-effective in terms of processing means the invention can be used in cost-effective products such as consumer products.

These and other aspects of the invention will be apparent from and elucidated with reference to the embodiments described hereinafter.

The particular aspects of the invention will now be explained with reference to the embodiments described hereinafter and considered in connection with the accompanying drawings, in which identical parts or sub-steps are designated in the same manner :
Fig.1 depicts the different functional blocks of the MPEG-4 video scene composition according to the invention,
Fig.2 depicts the hardware implementation of the MPEG-4 video scene composition method according to the invention,
Fig.3 depicts an embodiment of the invention.

The invention allows a video scene composition from input video streams encoded according to the MPEG-4 standard and input video streams coded according to other video standards different from the MPEG-4 standard. It is described for the case in which said video streams coded according to other video standards different from the MPEG-4 standard correspond to video streams coded according to the MPEG-2 video standard, but it would be apparent to those skilled in the art that this invention may also be used with other standards such as H.263, MPEG-1, or a proprietary company format.

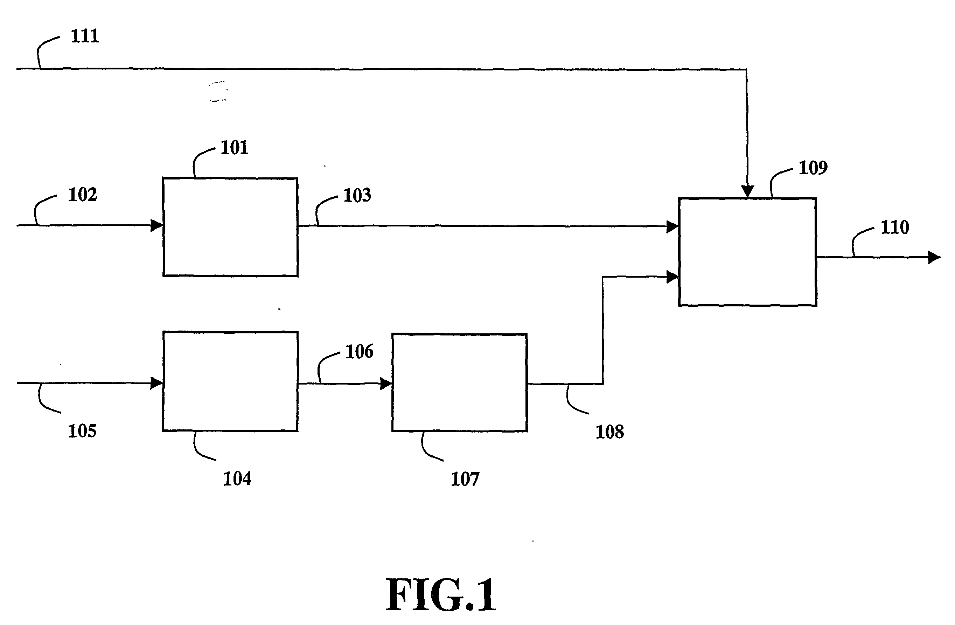

Fig.1 shows the different functional blocks of the video scene composition according to the invention.

The method of scene composition according to the invention comprises the following functional steps :
1. a first decoding step 101 for decoding an input video stream 102 containing input video objects coded according to the MPEG-4 video standard. This decoding step 101 results in decoded MPEG-4 video objects 103. If the input video stream 102 corresponds to a demultiplexed video stream or comprises a plurality of elementary video streams, each elementary video stream is decoded by a separate decoder during the decoding step 101 ;
2. a second decoding step 104 for decoding an input video stream 105 containing input coded video data not coded according to the MPEG-4 video standard, but coded, for example, according to the MPEG-2 video standard. This decoding step results in decoded MPEG-2 video data 106. If the input video stream 105 corresponds to a demultiplexed video stream or comprises a plurality of elementary video streams, each elementary video stream is decoded by a separate decoder during the decoding step 104.
3. a video object creation step 107 for generating video objects 108 from said decoded MPEG-2 video data 106. This step consists in associating with each decoded video data 106 a set of properties defining its characteristics in the final video scene. Each data structure, linked to a given video data 106, comprises for example :
   a) a field "depth" for defining the depth of said video data in the video scene (e.g. first ground or second ground),
   b) a field "transform" for defining a geometric transform of said video data (e.g. a rotation characterized by an angle),
   c) a field "transparency" for defining the transparency coefficient between said video data and other video objects in the video scene.
   In this way, the resulting video objects 108 are compatible with MPEG-4 video objects 103 in the sense that each video object 108 not only contains video frames but also refers to a set of characteristics allowing its description in the video scene.
4. a rendering step 109 for assembling the video objects 103 and 108. To this end, the video objects 103 and 108 are rendered by using their own object properties, or by using object properties (filled during the video object creation step 107, for video objects 103) contained in a BIFS stream 111 (Binary Format for Scene), said BIFS stream 111 containing a scene graph description describing each object properties in the scene. The assembling order of video objects is determined by the depth of each video object to be rendered : the video objects composing backgrounds are assembled first, then the video objects composing foregrounds are finally assembled. This rendering results in the delivery of an MPEG-4 video scene 110.

As an example, in an electronic program guide (EPG) allowing a viewer to browse TV programs, this method may be used for composing a video scene from an MPEG-2 video stream 105 and an MPEG-4 video stream 102, said MPEG-2 video stream 105 defining, after decoding 104, a full screen background MPEG-2 video, while said MPEG-4 video stream defines, after decoding 101, a first object MPEG4_video_objectl corresponding to a video of reduced format (used as a TV preview, for example) and a second object MPEG4_video_object2 corresponding to textual information (used as time and channel indications).

The rendering of these three video elements is made possible by the association of a set of properties Scene_video_object3 with the decoded MPEG-2 video in order to define the characteristics of this MPEG-2 video in the video scene, this association resulting in the video object MPEG4_video_object3. The two decoded MPEG-4 objects, are each associated, according to the MPEG-4 syntax relative to scene description, with a set of properties Scene_video_object1 (and Scene_video_object2) in order to define their characteristics in the video scene. These two sets Scene_video_object1 and Scene_video_object2 may be filled by pre-set parameters or by parameters contained in the BIFS stream 111. In this latter possibility, the composed scene may be real-time updated, especially if the BIFS update mechanism, well know to those skilled in the art, is used, which allows to change the characteristics of video objects in the scene.

In each video object structure, a structure Buffer_video is also defined for accessing video data, i.e. video frames, by three pointers pointing to respective components Y, U and V of each video data. For example, the component Y of the video object 1 is accessed by pointer pt_video1_Y, while the components U and V are accessed by pointers pt_video1_U and pt_videol_V, respectively.
The corresponding scene graph has the following structure :

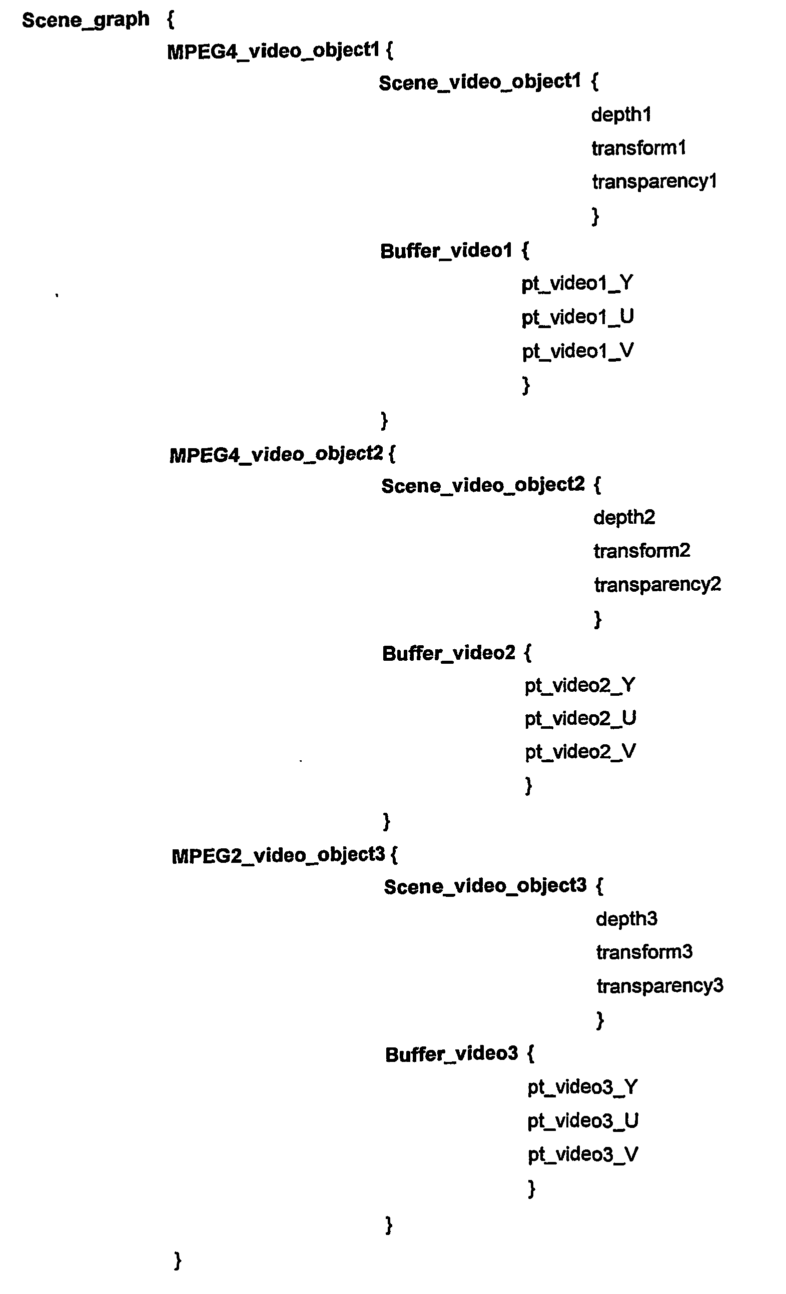

The rendering step 109 first assembles the MPEG-4 objects MPEG4_video_object1 and MPEG4_video_object2 in a composition buffer by taking into consideration characteristics of the structures Scene_video_object1 and Scene_video_object2. Then the video object MPEG2_video_object3 is rendered along with previously rendered MPEG-4 objects, for which the characteristics of the structure Scene_video_object3 are taken into account.

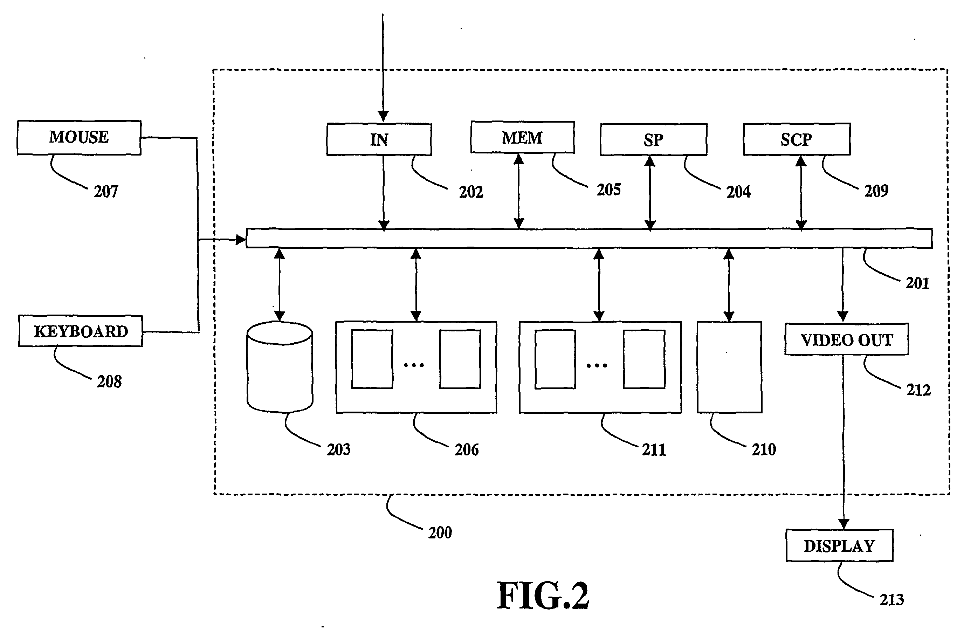

Fig.2 shows the hardware architecture 200 for implementing the different steps of the video scene composition according to the invention.

This architecture is structured around a data bus 201 to ensure data exchange between the different processing hardware units. This architecture includes an input peripheral 202 for receiving MPEG-4 and MPEG-2 input video streams, which are both stored in the mass storage 203.

The decoding of video streams coded according to the MPEG-4 standard is done with the signal processor 204 (referred to as SP in the figure) executing instructions relative to an MPEG-4 decoding algorithm stored in memory 205, while the decoding of video streams coded according to MPEG-2 is also done with the signal processor 204 executing instructions relative to an MPEG-2 decoding algorithm stored in said memory 205 (or an appropriate decoding algorithm if the input video stream is coded according to a video standard other than the MPEG-2 one). Once decoded, MPEG-4 video objects are stored in a first data pool buffer 206, while MPEG-2 video data are stored in a second data pool buffer 211.

The video rendering step is performed by the signal processor 204 executing instructions relative to a rendering algorithm stored in the memory 205. The rendering is performed in that not only decoded MPEG-4 objects but also decoded MPEG-2 data are assembled in a composition buffer 210. To this end, in order to avoid multiple and expensive data manipulation, decoded MPEG-2 data are re-copied by a signal co-processor 209 (referred to as SCP in the Figure) directly from buffer 211 into said composition buffer 210. This re-copying ensures that a minimum computational load is used, which does not limit other tasks in the application such as the decoding or the rendering tasks. At the same time, the set of properties relative to said MPEG-2 data is filled and taken into account by the signal processor during the rendering step. In this way, MPEG-2 data have a similar structure as MPEG-4 ones (i.e. association of video data and properties), which allows the rendering of the total of the input video objects. Thus, the rendering takes into account not only MPEG-4 objects properties and MPEG-2 properties, but also data relative:
1. to the action of a mouse 207 and/or a keyboard 208,
2. and/or to BIFS commands issued from a BIFS Stream stored in the storage device 203 or received via input peripheral 202,
for changing the position of video objects in the video scene being built up, in dependence on the action of the viewer using the EPG.

When a rendered frame is available in the contents of buffer 210, it is presented to an output video peripheral 212 for being displayed on a display 213.

In this implementation, the processor 204 and the co-processor 209 are used simultaneously, so that MPEG-4 input video objects composing the next output frame of the video scene can always be decoded during the re-copying by the SCP in the composition buffer of decoded MPEG-2 video data composing the current output frame of the video scene. This is made possible by the non CPU-consuming process (Clock Pulse Units) carried out by the SCP, which allows the SP to use the full CPU processing capacity. This optimized processing will be highly appreciated by those skilled in the art, especially in a real-time video scene composition context where input video objects of large size, requiring high computational resources, have to be processed.

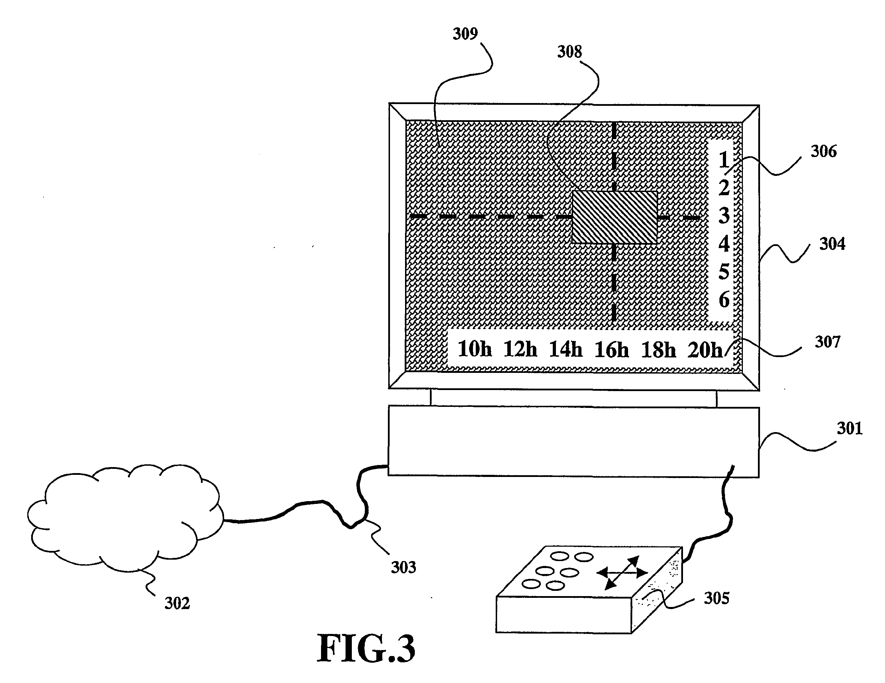

Fig.3 shows an embodiment of the invention. This embodiment corresponds to an electronic program guide application (EPG) allowing a viewer to watch miscellaneous information relative to TV channels programs on a display 304. To this end, the viewer navigates through the screen in translating, by means of a mouse-like/pointer device305, the browsing window 308 into a channels space 306 and a time space 307, said browsing window playing the corresponding video preview of the chosen time/channel combination. The browsing window 308 is overlaid and blended on top of a background video 309.

The different steps according to the invention described with reference to Fig.1 are implemented in a set-top box unit 301 which receives input video data from an outside world 302. Said input video data, in this example corresponds, for example, to MPEG-4 video data delivered by a first broadcaster (e.g. video objects 306-307-308) and to MPEG-2 video data delivered by a second broadcaster (e.g. video data 309), via a communication link 303. Said input video data are processed in accordance with the different steps of the invention shown in Fig. with the use of a hardware architecture as shown in Fig.2, resulting in MPEG-4 video composed frames composed by the total of the input video objects.

Of course, the presented graphic designs do not restrict the scope of the invention, indeed, alternative graphic designs may be envisaged without deviating from the scope of the invention.

There has been described an improved method of composing a scene content simultaneously from input video streams encoded according to the MPEG-4 video standard and from non MPEG-4 compliant video data (i.e. not coded according to the MPEG-4 standard) such as MPEG-2 video data. The method according to the invention relies on a video object creation step allowing to compose an MPEG-4 video scene from said non MPEG-4 compliant video data thanks to the association of scene properties with said non MPEG-4 compliant video data.

Of course, this invention is not restricted to the presented structure of scene properties associated to said non MPEG-4 video data, and alternative fields defining this structure may be considered without deviating from the scope of the invention.

This invention may be implemented in several manners, such as by means of wired electronic circuits, or alternatively by means of a set of instructions stored in a computer-readable medium, said instructions replacing at least part of said circuits and being executable under the control of a computer, a digital signal processor or a digital signal co-processor in order to carry out the same functions as fulfilled in said replaced circuits. The invention then also relates to a computer-readable medium comprising a software module that includes computer-executable instructions for performing the steps, or some steps, of the method above described.

## Claims

1. A method of composing an MPEG-4 video scene content at least from a first set of input video objects coded according to the MPEG-4 standard, said method comprising a first decoding step for generating a first set of decoded MPEG-4 video objects from said first set of input video objects, and a rendering step for generating composed frames of said video scene from at least said first set of decoded MPEG-4 video objects, **characterized in that** said method also comprises :
a) a second decoding step for generating a set of decoded video data from a second set of input video data not MPEG-4 compliant,
b) a video object creation step for generating a second set of video objects, each created video object being formed by the association of a decoded video data extracted from said set of decoded video data, and a set of properties for defining characteristics of said decoded video data in the video scene, said second set of video objects being rendered jointly with said first set of decoded MPEG-4 video objects during said rendering step.

2. A method of composing an MPEG-4 video scene content as claimed in claim 1, **characterized in that** said properties define the depth, a geometric transform and the transparency coefficient.

3. A method of composing an MPEG-4 video scene content as claimed in claim 1, **characterized in that** said second decoding step is dedicated to the decoding of input video data coded according to the MPEG-2 video standard.

4. A set-top box product for composing an MPEG-4 video scene at least from a first set of input video objects coded according to the MPEG-4 standard, said set-top box comprising a first decoding means for generating a first set of decoded MPEG-4 video objects from said first set of input video objects, and rendering means for generating composed frames of said video scene from at least said first set of decoded MPEG-4 video objects in a composition buffer, **characterized in that** the set-top box product also comprises :
a) a second decoding means for generating a set of decoded video data from a second set of input video data not MPEG-4 compliant,
b) video object creation means for generating a second set of video objects, each created video object being formed by the association of decoded video data extracted from said set of decoded video data, and a set of properties for defining characteristics of said decoded video data in the video scene, said second set of video objects being rendered jointly with said first set of decoded MPEG-4 video objects by said rendering means.

5. A set-top box product as claimed in claim 4, **characterized in that** :
a) decoding means correspond to the execution of dedicated program instructions by a signal processor, said program instructions being loaded in said signal processor or in a memory,
b) video object creation means correspond to the execution of dedicated program instructions by said signal processor, said program instructions being loaded in said signal processor or in a memory, said signal processor being dedicated to the association of data defining properties with each video data constituting said set of decoded video data so as to define characteristics of each decoded video data in the video scene,
c) rendering means not only correspond to the execution of dedicated program instructions by said signal processor, said program instructions being loaded in said signal processor or in a memory, but also to the execution of hardware functions by a signal co-processor in charge of the re-copying of said second set of video objects into said composition buffer.

6. A set-top box product as claimed in claim 4, **characterized in that** it comprises means for taking into account user interactions for the purpose of modifying the relative spatial positions of said first set of decoded MPEG-4 video objects and said second set of video objects in the MPEG-4 video scene.

7. A set-top box product as claimed in claim 4, **characterized in that** said second decoding means are dedicated to the decoding of input video data coded according to the MPEG-2 video standard.

8. A computer program product for a device composing an MPEG-4 video scene from MPEG-4 video objects and non-MPEG-4 video objects, which product comprises a set of instructions which, when loaded into said device, causes said device to carry out the method as claimed in claims 1 to 3.

## Patentansprüche

1. Verfahren zum Zusammensetzen des Inhalts einer MPEG-4-Videoszene aus mindestens einer ersten Gruppe von Eingangsvideoobjekten, die gemäß dem MPEG-4-Standard codiert sind, wobei das Verfahren einen ersten Decodierschritt zum Erzeugen einer ersten Gruppe von decodierten MPEG-4-Videoobjekten aus der ersten Gruppe von Eingangsvideoobjekten und einen Renderingschritt zum Erzeugen von zusammengesetzten Rahmen der Videoszene aus mindestens der ersten Gruppe von decodierten MPEG-4-Videoobjekten umfasst,
**dadurch gekennzeichnet, dass** das Verfahren außerdem Folgendes umfasst:
a) einen zweiten Decodierschritt zum Erzeugen einer Gruppe von decodierten Videodaten aus einer zweiten Gruppe von Eingangsvideodaten, die nicht MPEG-4-konform sind,
b) einen Videoobjekt-Erzeugungsschritt zum Erzeugen einer zweiten Gruppe von Videoobjekten, wobei jedes erzeugte Videoobjekt durch die Verknüpfung von decodierten Videodaten, die aus der Gruppe von decodierten Videodaten extrahiert werden, und einem Satz von Eigenschaften zum Definieren von Merkmalen der decodierten Videodaten in der Videoszene gebildet wird, wobei die zweite Gruppe von Videoobjekten während des Renderingschritts gemeinsam mit der ersten Gruppe von decodierten MPEG-4-Videoobjekten gerendert wird.

2. Verfahren zum Zusammensetzen des Inhalts einer MPEG-4-Videoszene nach Anspruch 1, **dadurch gekennzeichnet, dass** die Eigenschaften die Tiefe, eine geometrische Transformation und den Transpärenzkoeffizienten definieren.

3. Verfahren zum Zusammensetzen des Inhalts einer MPEG-4-Videoszene nach Anspruch 1, **dadurch gekennzeichnet, dass** der zweite Decodierschritt für die Decodierung von Eingangsvideodaten, die gemäß dem MPEG-2-Videostandard codiert sind, vorgesehen ist.

4. Set-Top-Box-Produkt zum Zusammensetzen einer MPEG-4-Videoszene aus mindestens einer ersten Gruppe von Eingangsvideoobjekten, die gemäß dem MPEG-4-Standard codiert sind, wobei die Set-Top-Box erste Decodiermittel zum Erzeugen einer ersten Gruppe von decodierten MPEG-4-Videoobjekten aus der ersten Gruppe von Eingangsvideoobjekten sowie Renderingmittel zum Erzeugen von zusammengesetzten Rahmen der Videoszene aus mindestens der ersten Gruppe von decodierten MPEG-4-Videoobjekten in einem Zusammensetzungspuffer umfasst, **dadurch gekennzeichnet, dass** das Set-Top-Box-Produkt außerdem Folgendes umfasst:
a) zweite Decodiermittel zum Erzeugen einer Gruppe von decodierten Videodaten aus einer zweiten Gruppe von Eingangsvideodaten, die nicht MPEG-4-konform sind,
b) Videoobjekt-Erzeugungsmittel zum Erzeugen einer zweiten Gruppe von Videoobjekten, wobei jedes erzeugte Videoobjekt durch die Verknüpfung von decodierten Videodaten, die aus der Gruppe von decodierten Videodaten extrahiert werden, und einem Satz von Eigenschaften zum Definieren von Merkmalen der decodierten Videodaten in der Videoszene gebildet wird, und wobei die zweite Gruppe von Videoobjekten durch die Renderingmittel gemeinsam mit der ersten Gruppe von decodierten MPEG-4-Videoobjekten gerendert wird.

5. Set-Top-Box-Produkt nach Anspruch 4, **dadurch gekennzeichnet, dass**:
a) die Decodiermittel sich auf die Ausführung von bestimmten Programmbefehlen durch einen Signalprozessor beziehen, wobei die Programmbefehle in den Signalprozessor oder in einen Speicher geladen sind,
b) die Videoobjekt-Erzeugungsmittel sich auf die Ausführung von bestimmten Programmbefehlen durch einen Signalprozessor beziehen , wobei die Programmbefehle in den Signalprozessor oder in einen Speicher geladen sind, und wobei der Signalprozessor für die Verknüpfung von Eigenschaften definierenden Daten mit allen Videodaten, die die Gruppe von decodierten Videodaten bilden, vorgesehen ist, um Merkmale aller decodierten Videodaten in der Videoszene zu definieren,
c) die Renderingmittel sich nicht nur auf die Ausführung von bestimmten Programmbefehlen durch einen Signalprozessor beziehen, wobei die Programmbefehle in den Signalprozessor oder in einen Speicher geladen sind, sondern auch auf die Ausführung von Hardware-Funktionen durch einen Signal-Coprozessor, der für das Umkopieren der zweiten Gruppe von Videoobjekten in der für das Umkopieren der zweiten Gruppe von Videoobjekten in den Zusammensetzungspuffer verantwortlich ist.

6. Set-Top-Box-Produkt nach Anspruch 4, **dadurch gekennzeichnet, dass** es Mittel zum Berücksichtigen von Benutzer-Interaktionen umfasst, um die relativen räumlichen Positionen der ersten Gruppe von decodierten MPEG-4-Videoobjekten und der zweiten Gruppe von Videoobjekten in der MPEG-4-Videoszene zu modifizieren.

7. Set-Top-Box-Produkt nach Anspruch 4, **dadurch gekennzeichnet, dass** die zweiten Decodiermittel für die Decodierung von Eingangsvideodaten, die gemäß dem MPEG-2-Videostandard codiert sind, vorgesehen sind.

8. Computerprogrammprodukt für eine Vorrichtung, die eine MPEG-4-Videoszene aus MPEG-4-Videoobjekten und Nicht-MPEG-4-Videoobjekten zusammensetzt, wobei das Produkt eine Befehlsgruppe umfasst, die dann, wenn sie in die Vorrichtung geladen ist, bewirkt, dass die Vorrichtung das in den Ansprüchen 1 bis 3 beanspruchte Verfahren ausführt.

## Revendications

1. Procédé de composition du contenu d'une scène vidéo MPEG-4 au moins à partir d'un premier ensemble d'objets vidéo d'entrée codés selon la norme MPEG-4, ledit procédé comprenant une première étape de production d'un premier ensemble d'objets vidéo MPEG-4 décodés à partir dudit premier ensemble d'objets vidéo d'entrée, et une étape de rendu pour produire des trames composées de ladite scène vidéo à partir d'au moins ledit premier ensemble d'objets vidéo MPEG-4 décodés, **caractérisé en ce que** ledit procédé comprend également :
a) une deuxième étape de décodage pour produire un ensemble de données vidéo décodées à partir d'un deuxième ensemble de données vidéo d'entrée ne respectant pas la norme MPEG-4,
b) une étape de création d'objets vidéo pour produire un deuxième ensemble d'objets vidéo, chaque objet vidéo créé étant formé par l'association d'une donnée vidéo décodée extraite dudit ensemble de données vidéo décodées, et d'un ensemble de propriétés permettant de définir des caractéristiques desdites données vidéo décodées dans la scène vidéo, ledit deuxième ensemble d'objets vidéo étant soumis à un rendu conjointement avec ledit premier ensemble d'objets vidéo MPEG-4 décodés pendant ladite étape de rendu.

2. Procédé de composition du contenu d'une scène vidéo MPEG-4 selon la revendication 1, **caractérisé en ce que** lesdites propriétés définissent la profondeur, une transformation géométrique et le coefficient de transparence.

3. Procédé de composition du contenu d'une scène vidéo MPEG-4 selon la revendication 1, **caractérisé en ce que** ladite deuxième étape de décodage est spécialisée pour le décodage de données vidéo d'entrée codées selon la norme vidéo MPEG-2.

4. Produit à base de boîtier décodeur permettant de composer une scène vidéo MPEG-4 au moins à partir d'un premier ensemble d'objets vidéo d'entrée codés selon la norme MPEG-4, ledit boîtier adaptateur comprenant des premiers moyens de décodage pour produire un premier ensemble d'objets vidéo MPEG-4 codés à partir dudit premier ensemble d'objets vidéo d'entrée, et des moyens de rendu pour produire des trames composées de ladite scène vidéo à partir d'au moins ledit premier ensemble d'objets vidéo MPEG-4 décodés dans un tampon de composition, **caractérisé en ce que** le produit à base de boîtier décodeur comprend également :
a) des deuxièmes moyens de décodage pour produire un ensemble de données vidéo décodées à partir d'un deuxième ensemble de données vidéo d'entrée ne respectant pas la norme MPEG-4,
b) des moyens de création d'objets vidéo pour produire un deuxième ensemble d'objets vidéo, chaque objet vidéo créé étant formé par l'association de données vidéo décodées extraites dudit ensemble de données vidéo décodées, et d'un ensemble de propriétés permettant de définir des caractéristiques desdites données vidéo décodées dans la scène vidéo, ledit deuxième ensemble d'objets vidéo étant soumis à un rendu conjointement avec ledit premier ensemble d'objets vidéo MPEG-4 décodés par lesdits moyens de rendu.

5. Produit à base de boîtier décodeur selon la revendication 4, **caractérisé en ce que** :
a) les moyens de décodage correspondent à l'exécution d'instructions de programmes spécialisées par un processeur de signal, lesdites instructions de programmes étant chargées dans ledit processeur de signal ou dans une mémoire,
b) les moyens de création d'objets vidéo correspondent à l'exécution d'instructions de programmes spécialisées par ledit processeur de signal, lesdites instructions de programmes étant chargées dans ledit processeur de signal ou dans une mémoire, ledit processeur de signal étant spécialisé dans l'association de propriétés définissant des données avec chaque donnée vidéo constituant ledit ensemble de données vidéo décodées de façon à définir des caractéristiques de chaque donnée vidéo décodée dans la scène vidéo,
c) les moyens de rendu correspondent non seulement à l'exécution d'instructions de programmes spécialisées par ledit processeur de signal, lesdites instructions de programmes étant chargées dans ledit processeur de signal ou dans une mémoire, mais également à l'exécution de fonctions matérielles par un coprocesseur de signal chargé de la recopie dudit second ensemble d'objets vidéo dans ledit tampon de composition.

6. Produit à base de boîtier décodeur selon la revendication 4, **caractérisé en ce qu'**il comprend des moyens permettant de prendre en compte des interactions de l'utilisateur dans le but de modifier les positions spatiales relatives dudit premier ensemble d'objets vidéo MPEG-4 décodés et dudit deuxième ensemble d'objets vidéo dans la scène vidéo MPEG-4.

7. Produit à base de boîtier décodeur selon la revendication 4, **caractérisé en ce que** lesdits deuxièmes moyens de décodage sont spécialisés dans le décodage de données vidéo d'entrée codées selon la norme vidéo MPEG-2.

8. Produit à base de programme informatique pour un dispositif composant une scène vidéo MPEG-4 à partir d'objets vidéo MPEG-4 et d'objets vidéo ne respectant pas la norme MPEG-4, lequel produit comprend un jeu d'instructions qui, lorsqu'elles sont chargées dans ledit dispositif, font en sorte que ledit dispositif met en oeuvre le procédé revendiqué dans les revendications 1 à 3.
